(19) Europäisches Patentamt / European Patent Office / Office européen des brevets

(11) **EP 3 084 853 B1**

(12) **EUROPEAN PATENT SPECIFICATION**

(45) Date of publication and mention of the grant of the patent:
**24.10.2018 Bulletin 2018/43**

(51) Int Cl.:
*F02M 51/06* (2006.01)  *H01L 41/12* (2006.01)
*H01L 41/20* (2006.01)  *H02N 2/02* (2006.01)
*F02M 63/00* (2006.01)  *F02M 61/16* (2006.01)
*F02D 41/20* (2006.01)  *F02M 57/00* (2006.01)
*G01L 23/10* (2006.01)  *G01L 23/14* (2006.01)

(21) Application number: **14871286.2**

(22) Date of filing: **19.12.2014**

(86) International application number:
**PCT/US2014/071532**

(87) International publication number:
**WO 2015/095720 (25.06.2015 Gazette 2015/25)**

(54) **FUEL PRESSURE DETECTION BY FAST MAGNETOSTRICTIVE ACTUATOR**

KRAFTSTOFFDRUCKERKENNUNG DURCH EINEN SCHNELLEN MAGNETOSTRIKTIVEN AKTOR

DÉTECTION DE PRESSION DE CARBURANT PAR ACTIONNEUR MAGNÉTOSTRICTIF RAPIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2013 US 201361918090 P**

(43) Date of publication of application:
**26.10.2016 Bulletin 2016/43**

(73) Proprietor: **Great Plains Diesel Technologies, L.C. Ames, Iowa 50010 (US)**

(72) Inventor: **BRIGHT, Charles, B. Ames, IA 50010 (US)**

(74) Representative: **Wood, Graham**
**Bailey Walsh & Co LLP**
**1 York Place**
**Leeds, LS1 2DR (GB)**

(56) References cited:
| | |
|---|---|
| **EP-A2- 1 130 249** | **WO-A2-2011/146907** |
| **US-A- 3 505 544** | **US-A- 5 740 969** |
| **US-A1- 2005 274 820** | **US-A1- 2012 037 126** |
| **US-A1- 2012 037 127** | **US-A1- 2014 217 932** |
| **US-B2- 7 456 530** | |

Description

## CROSS-REFERENCE TO RELATED APPLICATIONS

This application claims priority under 35 U.S.C. § 119 to provisional application Serial No. 61/918,090 filed December 19, 2013.

## FIELD OF THE INVENTION

This invention relates in general to a magnetostrictive actuator. Particularly, a magnetostrictive actuator that employs a rare earth alloy rod assembly with its grain oriented in the axial direction, an energizing helical winding or solenoid coil concentric to the rod assembly, and a magnetic flux return path. The magnetostrictive actuator contains zero magnetic field at zero current.

## BACKGROUND OF THE INVENTION

Development of the magnetostrictive actuator for the programmable diesel fuel injector in accordance with U.S. Patent Nos. 7,255,290; 8,113,179; 8,418,676; and, 8,683,982 have identified opportunities to improve prior art magnetostrictive actuators.

ELECTRO-MECHANICAL ACTUATORS

Much creative and ingenious innovation has gone into improving control over diesel fuel injection, which is apparent in trade magazines, society journals, scholarly papers, patents, books, etc. Ultimately, these efforts are limited by the physics of the two main electrical control technologies used to date: solenoids and piezo-electric ceramics, hereinafter piezo. Solenoid injectors date at least as far back as Gaff in 1913 while piezo injectors date at least from Bart in 1977. Thus, both solenoids and piezo have had the benefit of sustained attention to their limitations. Well into the piezo injector era, Benson et al in 2008 show that piezo has yet to fully replace solenoid technology.

In context here, Alexander Graham Bell's invention of the telephone deserves special mention. Bell leapfrogged intensely creative attempts to use the solenoid-operated telegraph to re-create intelligible speech. Key features of his telephone included the ability of the earphone diaphragm to quickly and proportionally follow its undulating analog electrical signal input-exactly the same feature required of a programmable diesel fuel injector that exercises continuous control over the rate at which fuel flows.

Solenoids offer durability, but are unsuitable for continuous control. Their key characteristic is that the mechanical motion can never be proportional to electrical input. While durable and reliable, neither intelligible speech nor ideal fuel rate shapes nor quick jets with minimal delay can be reproduced by the solenoid. By its operating principle, when a magnetic flux above a threshold value crosses an air gap, its two poles accelerate toward each other, closing the gap until, eventually, they impact each other and, depending on design details, bounce back. The force that accelerates the two poles is inversely proportional to the square of the gap between them, making velocity or position control difficult. Thus, the solenoid is either open, closed, bouncing, or transitioning between these states at a more or less uncontrollable rate.

Although their characteristic is occasionally described as "switching," implying telegraph-like ON-OFF behavior, unlike telegraphs, piezos offer speed and infinitely adjustable displacement within their range, permitting continuous control. The key feature of this technology is that mechanical expansion is proportional to applied voltage, within limits. Piezo force and displacement are akin to thermal expansion except electrically controllable and much, much faster. Piezos can be used to reproduce intelligible speech or to rate shape injected fuel, but only for a while. Their inherent critical defect is susceptibility to performance degradation as noted in U.S. Patent Nos. 5,875,764; 7,159,799; and, 7,262,543; MIL-STD-1376; and, Cain et al, among many references. This degradation or aging is the Achilles heel of piezo technology, disabling its use in a durable, continuously controllable, fast diesel injector. When lightly loaded to get reasonable life, piezos can offer a telegraph-style ON-OFF speed improvement over solenoids, enabling the faster and smaller multiple pulse injections in use to reduce incylinder formation of diesel emissions. Despite its speed and proportionality, limiting piezo to telegraph-like behavior to get a reasonable working life makes this approach less than ideal for rate shaping fuel injection.

The piezoelectric ceramic must be "poled" to operate. In context here, expansion requires an electrical input of only one polarity. If a reverse voltage of the same magnitude were applied to the piezoelectric ceramic, it is likely to be rendered inoperable by depoling. The forward voltage cannot exceed a threshold.

The U.S. Navy developed an intermetallic alloy of iron and the rare earths terbium and dysprosium for sonar-it is the magnetostrictive equivalent of piezoelectric ceramics. The alloy couples a magnetic input to a mechanical output.

It offers speed, infinitely adjustable displacement within its range, and the durability to survive on an engine cylinder head. The key feature of this technology is that mechanical expansion is proportional to the current sheet circulating around it, regardless of circulation direction. Magneto-strictive displacement and force are akin to thermal expansion except magnetically controllable and much, much faster as noted in Dapino et al and Faidley et al. A magnetostrictive actuator employing this alloy can reproduce intelligible speech or adaptably and quickly rate shape injected fuel without a durability limit.

The quantum mechanical origin of the magnetostrictive effect in the rare earth/transition metal alloy guarantees the survival of the effect itself. The effect does not fatigue. Alloy constituent proportions control the magnitude of the effect with respect to temperature, where the effect diminishes as temperature rises but returns fully as temperature falls. High field does not degrade the alloy.

Precision fuel injection requires fine control which in turn requires accurate knowledge of operating conditions such as fuel pressure. If the magnetostrictive actuator is to provide a step transient displacement response free of overshoot and ringing, an exact electrical input to match this requirement can be calculated. However, ringing, overshoot, or undershoot will appear if the actual preload value is different than that used to calculate the required electrical input.

Thus, knowledge of the actual preload value is desired.

WO2011/146907 discloses the provision of an electromechanical actuator with a piezoelectric actuated fuel injection system which includes a force sensor for sensing the force in the fuel injector. US2005/274820 discloses a fuel injection actuator of the magnetostrictive type with a solenoid coil.

## BRIEF SUMMARY OF THE INVENTION

It is an object of the present invention to take full advantage of the inherent properties of the alloy, particularly its speed and continuous control properties.

The magnetostrictive alloy possesses yet another key characteristic that permits quantification of its preload while the engine is operating. This characteristic is the continuous variability of both its magnetic permeability and its elastic modulus. Fuel pressure, such as common rail fuel pressure, provides the necessary preload on the magnetostrictive actuator. The value of the preload affects the values of the magnetic permeability and elastic modulus. The actuator is a symmetric, reciprocal device in that a mechanical input generates an electrical output and vice versa.

Due to coupling between electromagnetic and mechanical effects, if the wrong preload is used in the control calculation, observable ringing and overshoot or undershoot will occur.

Therefore, fuel pressure can be measured in operation by adjusting the calculation for actuator electrical input until ringing can no longer be detected.

In a first aspect of the invention there is provided a method of operating an electromechanical actuator to measure a mechanical load, wherein the method comprises: providing a mechanical load; providing an electromechanical magnetostrictive actuator, an injector, detecting an absence or presence of ringing, undershoot, or overshoot in a step transient response mechanical displacement waveform while the injector is injecting; measuring the mechanical load based on the detection; calculating a next step transient response based on the measurement; adjusting a continuous control of current based on the calculation and characterised in that the electromechanical magnetostrictive actuator includes, a rare earth alloy rod assembly, a first coil, a magnetic flux return path, and a second coil positioned between the rare earth alloy rod assembly and the first coil.

These and other objects, features or advantages of the present invention will become apparent from the specification and claims.

## BRIEF DESCRIPTION OF THE DRAWINGS

Numerous other objects, features, and advantages should become apparent upon a reading of the following detailed description taken in conjunction with the accompanying drawing, in which:

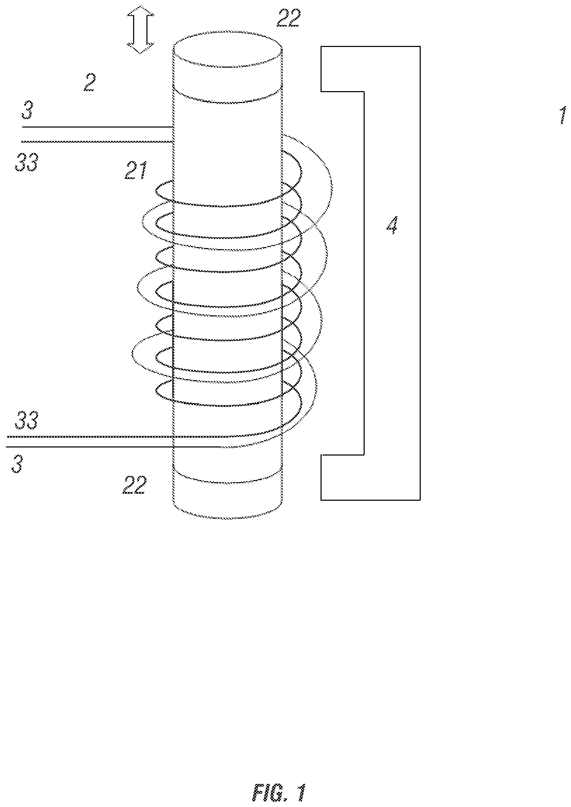

FIG. 1 is a schematic view of a magnetostrictive actuator.

## DETAILED DESCRIPTION OF THE INVENTION

Refer to Figure 1 for the preferred embodiment of the magnetostrictive actuator of the present invention.

The magnetostrictive actuator 1 employs a rare earth alloy rod assembly 2 with its grain oriented in the axial direction, an energizing helical winding or solenoid coil 3 concentric to the rod assembly 2, and a magnetic flux return path 4. The actuator contains zero magnetic field at zero current.

The rod assembly 2 may be formed of a rare earth/transition metal magnetostrictive alloy **21** and ferromagnetic end caps **22**. The rare earth/transition metal magnetostrictive alloy **21** may be formed of a grain-oriented polycrystalline rare earth/transition metal material of the formula $Tb_xDy_{1-x}Fe_{2-w}$, wherein $0.20<=x<=1.00$ and $0<=w<=0.20$. The grains of the material have their common principal axes substantially pointed along the growth axis of the material which is within 10° of the $\lambda_{111}$ axis.

As the rare earth/transition metal magnetostrictive alloy **21** has its grain oriented in the axial direction, the rare earth/transition metal magnetostrictive alloy **21** is provided as a solid magnetostrictive material with a favored direction of magnetostrictive response formed into a shape with ends that are substantially parallel to each other and substantially perpendicular to the favored direction of magnetostrictive response.

The shape of the rare earth/transition metal magnetostrictive alloy **21** may be a cylinder, ellipsoid, parallelepiped, prismatic, other similar shapes, or other suitable shapes. The rare earth/transition metal magnetostrictive alloy **21** may have a transverse dimension perpendicular to the direction of magnetostrictive response substantially smaller than one quarter wavelength at the electromechanical resonant frequency of the apparatus. The rare earth/transition metal magnetostrictive alloy **21** may have a length in the direction of magnetostrictive response of no greater than one quarter wavelength at the electromechanical resonant frequency of the apparatus.

As is understood, lines of magnetic force have no beginning and no end. To minimize the energy required to generate a field strength sufficient to excite the rod assembly **2,** a path **4** of preferably ferromagnetic material is provided to guide the lines of magnetic force around the outside of the coil **3** from one end of the rod assembly **2** to the other.

OPERATING DESCRIPTION

At rest, current is zero. A voltage waveform of one polarity is applied at an initial time $t_0$, inducing a current waveform of matching polarity to flow through coil **3.** The current within coil **3** may be thought of as a sheet of electrons circulating around the axis of coil **3.** As is known, the circulating sheet of electrons establishes a magnetic field of matching polarity. This field generates magnetic lines of force that cross into rod assembly **2** with a corresponding magnetic flux density of matching polarity, the magnitude of which depends upon the magnetic permeability of the entire magnetic circuit, including rod assembly **2.** Lines of flux close back on themselves through the flux return path **4** which, together with rod assembly **2,** forms the entire magnetic circuit. The magnetic flux waveform within rod assembly **2,** regardless of polarity, causes a corresponding axial expansion waveform.

Continuous control of the current into coil **3** continuously controls the axial expansion or contraction of rod assembly **2.** The rate at which current increases or decreases and its maximum magnitude are both converted by rod assembly **2** into a corresponding mechanical displacement waveform.

The continuous control of the current into coil **3** is calculated based on a particular preload value, the preload value being provided by the common rail fuel pressure. The step transient response mechanical displacement waveform may be required to not ring or overshoot or undershoot. If ringing or overshoot or undershoot are detected, the calculation for the next injection cycle would adjust the continuous control of the current accordingly.

There is more than one method for detecting electrical ringing, overshoot, or undershoot. One embodiment of the present invention uses electronic circuitry to compare the desired current meant to go through coil **3** with the actual current going through coil **3.** This is significant because the injector will be simpler and looking at the difference between the desired waveform and the actual waveform while the injector is injecting provides better accuracy than active "pinging" where it seeks to send out an interrogating pulse while the injector is not injecting. Simply put, making this measurement while the injector is injecting provides for greater accuracy because all dynamics are accounted for. Thus, an embodiment of the present invention that is more sensitive uses a separate coil **33** between rod **2** and coil **3,** this separate coil **33** being made of many more turns of fine or very fine wire for better fidelity. This embodiment detects the voltage induced by the changing magnetic flux, wherein the variation in flux being the consequence of the current in coil **3.** The detected voltage is scaled and conditioned to be compared with the desired current meant to go through coil **3.** Thus, this embodiment may detect unintended ringing in the electrical input during an injection rather than pinging the actuator while the injection is not occurring.

The features and advantages described in the specification are not all inclusive, and particularly, many additional features and advantages will be apparent to one of ordinary skill in the art in view of the drawings, specification, and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

Those of ordinary skill in the art will realize that the following description of the present invention is illustrative only and not in any way limiting. Other embodiments of the invention will readily suggest themselves to such skilled persons.

The embodiment disclosed herein was chosen and described in order best to explain the principles of the invention and its practical application, thereby to enable others skilled in the art best to utilize the invention in various embodiments and with various modifications as are suited to the particular use contemplated therefore. It is intended that the scope of the invention be defined by the claims appended hereto, when interpreted in accordance with the full breadth to which they are legally and equitably entitled.

## Claims

**1.** A method of operating an electromechanical actuator to measure a mechanical load, wherein the method comprises:

providing a mechanical load;
providing an electromechanical magnetostrictive actuator (1), an injector,
detecting an absence or presence of ringing, undershoot, or overshoot in a step transient response mechanical displacement waveform while the injector is injecting;
measuring the mechanical load based on the detection;
calculating a next step transient response based on the measurement;
adjusting a continuous control of current based on the calculation and **characterised in that** the electromechanical magnetostrictive actuator (1) includes , a rare earth alloy rod assembly (2), a first coil (3), a magnetic flux return path (4), and a second coil (33) positioned between the rare earth alloy rod assembly (2) and the first coil (3).

**2.** The method of claim 1, wherein the mechanical load is due to fuel pressure.

**3.** The method of claim 1, wherein the rare earth alloy rod assembly (2) comprises a rare earth/transition metal magnetostrictive alloy (21).

**4.** The method of claim 3, wherein the rare earth/transition metal magnetostrictive alloy (21) is a grain-oriented polycrystalline rare earth/transition metal material of the formula $Tb_xDy_{1-x}Fe_{2-w}$, wherein $0.20<=x<=1.00$ and $0<=w<=0.20$.

**5.** The method of claim 4, wherein the rare earth/transition metal magnetostrictive alloy (21) has a length in the direction of magnetostrictive response of no greater than one quarter wavelength at an electromechanical resonant frequency of the electromechanical actuator.

**6.** The method of claim 1, wherein the second coil comprises (33) more turns per unit length with respect to the first coil (3).

**7.** The method of claim 1, wherein the electromechanical actuator contains zero magnetic field at zero current.

## Patentansprüche

**1.** Verfahren zum Betreiben eines elektromechanischen Aktors zum Messen einer mechanischen Last, wobei das Verfahren Folgendes aufweist:

Bereitstellen einer mechanischen Last;
Bereitstellen eines elektromechanischen magnetostriktiven Aktors (1), einer Einspritzvorrichtung;
Erkennen eines Fehlens oder einer Anwesenheit eines Einschwingers, Nachschwingers oder Überschwingers in einer Wellenform des Übergangsverhaltens bei mechanischer Verlagerung, während die Einspritzvorrichtung einspritzt;
Messen der mechanischen Last auf Basis der Erkennung;
Berechnen eines nächsten Übergangsverhaltens auf Basis der Messung;
Einstellen einer kontinuierlichen Stromregelung auf Basis der Berechnung und **dadurch gekennzeichnet, dass** der elektromechanische magnetostriktive Aktor (1) Folgendes beinhaltet: eine Seltene-Erden-Legierungsstabanordnung (2), eine erste Spule (3), einen Magnetflussrückweg (4) und eine zweite Spule (33), die zwischen der Seltene-Erden-Legierungsstabanordnung (2) und der ersten Spule (3) angeordnet ist.

**2.** Verfahren nach Anspruch 1, wobei die mechanische Last auf Kraftstoffdruck beruht.

**3.** Verfahren nach Anspruch 1, wobei die Seltene-Erden-Legierungsstabanordnung (2) eine magnetostriktive Seltene-Erden-/Übergangsmetall-Legierung (21) aufweist.

**4.** Verfahren nach Anspruch 3, wobei die magnetostriktive Seltene-Erden-/Übergangsmetall-Legierung (21) ein kornorientiertes polykristallines Seltene-Erden-/Übergangsmetallmaterial der folgenden Formel ist: $Tb_xDy_{1-x}Fe_{2-w}$, wobei $0,20<=x<=1,00$ und $0<=w<=0,20$.

**5.** Verfahren nach Anspruch 4, wobei die magnetostriktive Seltene-Erden-/Übergangsmetall-Legierung (21) eine Länge in der Richtung des magnetostriktiven Verhaltens von höchstens einer Viertelwellenlänge bei einer elektromechanischen Resonanzfrequenz des elektromechanischen Aktors hat.

**6.** Verfahren nach Anspruch 1, wobei die zweite Spule (33) in Bezug auf die erste Spule (3) eine größere Windungszahl aufweist.

**7.** Verfahren nach Anspruch 1, wobei der elektromechanische Aktor null Magnetfeld bei null Strom enthält.

## Revendications

**1.** Procédé d'exploitation d'un actionneur électromécanique pour mesurer une charge mécanique, le procédé comprenant les opérations consistant à :

    mettre à disposition une charge mécanique ;
    mettre à disposition un actionneur magnétostrictif électromécanique (1), un injecteur,
    détecter une absence ou une présence d'oscillations, de dépassement négatif ou de dépassement positif dans une forme d'onde de déplacement mécanique de réponse transitoire en échelons pendant que l'injecteur est en train d'injecter ;
    mesurer la charge mécanique sur la base de la détection ;
    calculer une réponse transitoire de prochain échelon sur la base de la mesure ;
    ajuster un contrôle continu du courant sur la base du calcul, et **caractérisé en ce que** l'actionneur magnétostrictif électromécanique (1) inclut, un ensemble tige en alliage de terres rares (2), une première bobine (3), un trajet de retour de flux magnétique (4), et une deuxième bobine (33) positionnée entre l'ensemble tige en alliage de terres rares (2) et la première bobine (3).

**2.** Procédé de la revendication 1, la charge mécanique étant due à une pression de carburant.

**3.** Procédé de la revendication 1, l'ensemble tige en alliage de terres rares (2) comprenant un alliage magnétostrictif de terres rares/métal de transition (21).

**4.** Procédé de la revendication 3, l'alliage magnétostrictif de terres rares/métal de transition (21) étant une matière de terres rares/métal de transition polycristalline à grains orientés ayant pour formule

$$Tb_xDy_{1-x}Fe_{2-w}, \text{ où } 0,20<=x<=1,00 \text{ et } 0<=w<=0,20$$

**5.** Procédé de la revendication 4, l'alliage magnétostrictif de terres rares/métal de transition (21) ayant une longueur dans le sens de la réponse magnétostrictive qui n'est pas plus grande qu'un quart de longueur d'onde à une fréquence de résonance électromécanique de l'actionneur électromécanique.

**6.** Procédé de la revendication 1, la deuxième bobine comprenant (33) davantage de spires par longueur unitaire par rapport à la première bobine (3).

**7.** Procédé de la revendication 1, l'actionneur électromécanique contenant un champ magnétique nul à un courant nul.

*FIG. 1*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61918090 B
- US 7255290 B
- US 8113179 B
- US 8418676 B
- US 8683982 B
- US 5875764 A
- US 7159799 B
- US 7262543 B
- WO 2011146907 A
- US 2005274820 A